(19) Europäisches Patentamt
European Patent Office
Office européen des brevets

(11) **EP 4 311 875 A1**

(12) **EUROPEAN PATENT APPLICATION**

(43) Date of publication:
**31.01.2024 Bulletin 2024/05**

(21) Application number: **22187285.6**

(22) Date of filing: **27.07.2022**

(51) International Patent Classification (IPC):
**D06M 11/79** (2006.01)   **D06M 13/507** (2006.01)
**B01J 20/10** (2006.01)   **B01J 20/32** (2006.01)
**C09K 3/32** (2006.01)

(52) Cooperative Patent Classification (CPC):
**D06M 11/79; B01J 20/103; B01J 20/3208;
B01J 20/3236; C09K 3/32; D06M 13/507**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Technische Universität Darmstadt
64289 Darmstadt (DE)**

(72) Inventors:
• **Stanzel, Mathias
  60385 Frankfurt (DE)**
• **Rath, Nicole
  63179 Obertshausen (DE)**
• **Biesalski, Markus
  63477 Maintal (DE)**
• **Andrieu-Brunsen, Annette
  64287 Darmstadt (DE)**

(74) Representative: **Fuchs Patentanwälte
Partnerschaft mbB
Tower 185
Friedrich-Ebert-Anlage 35-37
60327 Frankfurt am Main (DE)**

(54) **NON-WOVEN FABRIC COATED WITH SILICA, METHOD FOR MANUFACTURING IT AND ITS USE**

(57)   New uses of a silica impregnated fibrous non-woven fabric are disclosed with an air-dry silica content of 4 - 30 wt.-% for binding nonpolar and/or oily liquids as well as hydrophobic binder fleeces and processes.

**Figure 1**

**Description**

The application pertains to new uses of a silica coated fibrous non-woven fabric with an air-dry silica content of 7 - 30 wt.-% for binding nonpolar and/or oily liquids as well as the binder fleeces and processes.

Technical background of the invention

Oil binders are used to bind mineral oils from building yards, road maintenance departments and fire brigades. Prior art oil binders rely mostly on grained-powders or liquids. Basic materials are often mineral or vegetable substances (e.g. corncob granules). There are also fleeces, cubes and much more to safely absorb oil in certain situations. Also floating oil binding agents exist which are used in combination with oil barriers and oil rakes to remove mineral oils from bodies of water.

The most common area of application is the removal of leaking liquids after a traffic accident or traces of oil from cars with a ruptured oil pan. Powdery oil binding agents used for spreading and removing the oil can significantly impair the sweepability of this mixture of oil with oil binding agent by creating a smear, so that a remaining trace of oil binding agent cannot be avoided.

Traces of oil binder must not remain to create slip resistance. When selecting the product, it is therefore important to ensure that the oil binding agent for traffic areas cannot produce dust from production to use, i.e. does not tend to form powdery components.

Other oil binding materials, such as for example fleeces, are normally only single-use and meant to be disposed after binding the oil, rendering itself toxic waste which needs to be carefully disposed.

Furthermore, especially oil binding fleeces, consist mostly of polymers (polypropylene) or other composite materials which cannot be recycled, use valuable fossil resources and can pose an environmental problem in themselves.

On the other hand, additional applications can be envisaged for oil binding materials, for example for cleaning clothes, skin or other household areas. Also the chemical industry is interested in oil binders, for example for a cheap phase separation of nonpolar and polar components during industrial processes.

Thus, there is a wide need for environmentally friendly, recyclable oil binding materials.

The present invention solves the aforementioned environmental problems by providing environmentally hydrophobic binder fleeces, which can be used as oil binding fleeces and can even be recycled (both the oil-binder itself, as well as the oily or nonpolar component bound to it).

Description of the invention

In a first aspect, the present invention relates to the use of a silica coated fibrous non-woven fabric with air-dry silica content of 4 - 30 wt.-% for binding nonpolar and/or oily liquids for at least 1 hour or more, preferably 2 hours or more, preferably 6 hours or more, preferably 24 hours or more, preferably 48 hours or more, preferably 3 days or more, preferably 1 week or more, preferably 1 month or more, preferably 1 year or more, preferably indefinitely, within the silica coated fibrous non-woven fabric.

In a first aspect, the present invention relates to the use of a silica coated fibrous non-woven fabric with air-dry silica content of 7 - 30 wt.-%, preferably at least 10.5 wt.-%, and having a surface energy on both sides, which is increased as compared to the non-impregnated fibrous non-woven fabric for binding nonpolar and/or oily liquids.

As such the silica coated fibrous non-woven fabric may be used in a number of applications in which nonpolar liquids need to be absorbed, for example it may be are used to bind mineral oils from building yards, road maintenance departments and fire brigades. Since the silica coated fibrous non-woven fabric are able to float on water, it can be used in combination with oil barriers and oil rakes to remove mineral oils from bodies of water.

Further uses include the removal of leaking operating materials after a traffic accident or traces of oil from cars with a ruptured oil pan. One advantage in this respect is, that the inventive silica coated fibrous non-woven fabric show such a good oil-binding activity that little or no smear or remnants are created. The inventive silica coated fibrous non-woven fabric may also be used as a chemical binders for absorbing nonpolar chemicals, including for use in industry, on traffic areas or in bodies of water. As universal binders, they can be used for hazardous substances as well as for mineral oils, preferably the material of the fibrous non-woven fabric is resistant to the respective chemical.

Such nonpolar chemicals may be selected from the list comprising organic oils (including natural fats and oils), mineral oils, fats, petrol/gasoline, organic solvents, alkanes, alkenes, alkines, benzene and other aromatic derivatives, ether, toluene, chloroform, diethyl ether, ethyl acetate, turpentine, tetramethylsilan, etc.

Accidents involving chemicals that are transported hot and cool and solidify in the event of a leak are particularly problematic. Before these products can be picked up with oil absorbents, they must be dissolved with hot water generated at the accident site or condensate brought in. This work can usually only be managed by plant fire brigades with special equipment.

Further uses include the use of the inventive silica coated fibrous non-woven fabric for recycling of a nonpolar liquid and/or chemical as described hereinunder. Also beneficial is that the inventive silica coated fibrous non-woven fabric itself is so stable that it can be recycled several times and thus reduces the waste created.

Further uses also include as household articles, for example kitchen sponges, kitchen towels, kitchen fleeces and the like, as well as products of the personal hygiene, such as make-up removal pads, cotton swabs, towels, wet wipes, toilet paper, and the like, where at least one surface has a binding activity for nonpolar and/or oily liquids. In those areas the inventive silica coated fibrous non-woven fabrics can be used to bind nonpolar liquids, for example such as cooking oils, facial fat, earwax, cosmetics, etc. and/or can be used to apply oily crèmes or oils to the skin. Especially for babies wet wipes with natural oils (e.g. coconut-oil, almond oil and/or olive oil) are preferred. In yet another embodiment bacterial nanocellulose (BNC) fleeces can be impregnated in order to bind nonpolar liquids. Such BNCs or other inventive silica coated fibrous non-woven fabrics can be used for cosmetic and/or medical purposes, for example as face-masks, Band Aid®, adhesive tape, dressing or the like, especially when combined with nonpolar cosmetic and/or pharmaceutical compositions.

The advantage of the described use, product and process according to the invention compared to the state of the art is an environmentally friendly, non-toxic final product (i.e. only comprising $SiO_2$), which also allows the technical use of the oil-binding fibrous non-woven fabric according to the invention in environmentally sensitive areas. Furthermore, the impregnation can be carried out at temperatures below 150°C (preferably between 4 - 40°C; or ambient temperature at 20°C) and atmospheric pressure, which leads to significant energy savings.

In one first aspect, a fibrous non-woven fabric with oil-binding abilities is provided. Preferably, the fibrous non-woven fabric is selected from the group consisting of non-woven paper fabrics, non-woven textile fabrics, in particular non-woven cotton fabrics. In some aspects the non-woven textile fabric may be made of polymers, such as for example polylactic acid (PLA) or other biogenic, nonpolar or lightly polar polymeric fibers, such as for example silk fibers. As such biodegradable polymers are preferred, for example biopolyesters of synthetic or microorganism origin (e.g. polyhydroxybutyrate and polylactic acid), or agro-polymers such as polysaccharides (e.g. starches), proteins (e.g. animal based whey or plant derived gluten), etc. Particularly preferably, the fibrous non-woven fabric is selected from the group comprising non-woven paper fabric, viscose (regenerated cellulose) and/or cotton and/or any combination thereof.

The fibrous non-woven fabric of the present invention is a fibrous non-woven fabric. Preferably, the fibrous non-woven fabric is selected from the group consisting of non-woven paper fabrics and non-woven textile fabrics. Particularly preferably, the fibrous non-woven fabric is a non-woven paper fabric.

Preferably, the fibrous non-woven fabrics of the invention still maintain flexibility.

Thus, in one embodiment, the paper mentioned hereinunder is selected from the group consisting of eucalyptus paper and/or northern bleached softwood kraft (NBSK). In other embodiments cotton linters (80 g/m²) and/or abaca (13 g/m²). Other papers that can be used according to the invention include: Aburatorigami, Affiche paper, Albumin paper, Alfapaper, Amatl, APCO II/II (DIN 16519 T2), Watercolour paper (between 120 g/m² up to 850 g/m² , for watercolour board from approx. 150 g/m² ), copying paper, lining paper, baking paper, banana paper, banknote paper, baryta paper, bible printing paper (grammage between 25 and 60 g/m² ; also known as thin printing paper), illustration paper, blueprint paper, bombyzine paper, letter paper, stamp paper, book paper, coloured paper, handmade paper, buttered paper or parchment substitute, China paper, Chinese rice paper, chromo paper, down printing paper, decalcifying paper, thick printing paper, document paper, double wax paper, printing paper, duplex paper, carbonless paper (also known as carbonless paper or copy paper, grammage 30-40 g/m² ), Ice paper (ice board or alabaster paper), elephant skin, electrical insulating paper, ivory paper, ivory board (grammage from 240 to 320 g/m² ), continuous printing paper for EDP printing (DIN 672), label paper, fabriano paper, Fine papers (all wood-free and rag-containing papers according to DIN), filter paper, felt paper, flock paper (velour paper), florpost (florpost paper), photo paper, coated paper, ribbed paper or verge paper, glass-fibre paper, Gummed paper, rag paper (at least 10% rag or cotton, hemp or flax fibre), semi-chemical paper (at least 65% semi-chemical pulp of the total fibre pulp), hemp paper, hard paper (fibre composite of paper and a phenol-formaldehyde synthetic resin (phenoplast), hard post paper (also bank post paper), high-gloss paper (one-sided cast-coated but not calendered paper), Wood-free paper (not more than 5% by weight of lignified fibres), Wood-containing paper (not less than 5% by weight of lignified fibres), Hydrographic paper, Hygienic papers (especially tissue papers), Ingres paper (hand-made or cylinder mould hand-made paper, Japan paper, potassium iodide starch paper, chancery paper (grammage of 60 and 120 g/m² ), carbon paper, Khoi paper, copying paper, corrosion protection paper (VCI paper, Volatile Corrosion Inhibitor), kraft liner, kraft paper (also: Packing paper) (grammage formerly around 130 g/m² , today around 80 g/m² ), Chalk paper, Crepe paper, Kitchen crepe, Art paper, Plastic fibre papers or plastic papers, Copper printing paper, Map paper, Leather paper, Light tracing paper, Blotting paper (also non-woven paper), Manila paper, Medical papers (ISO 11607, EN 868-6 , EN 868-3, and ISO 10993-5), Metallised paper, Metal-laminated paper, Medium-fine papers, Mummy paper, Natural fibre papers (these include papers made from cotton, banana, sisal, mulberry fibres, rice, maize, wheat straw paper, kudzu paper, daphne paper (Lokta, Nepal, Himalayan paper) *Daphne bholua* and *Daphne papyracea*), Non-impregnated paper (non-impregnated paper, at most with a surface treatment or pigmentation of up to 5 g/m² ), offset printing paper (also known as offset paper for short), oiled paper or waxed paper according to DIN 6730, parabaic, parchment substitute (also known as buttered paper), parchment paper, parchment substitute (also known as greaseproof paper), parchment, poster paper, plotter paper, post paper (grammage between 70 and 120 g/m$^2$ ), quartz fibre paper (filter paper containing quartz fibres), swell paper, recycled paper (any paper containing more than 25 % recovered paper before further refinement), rice paper, raw paper, saa paper (also known as siam paper), absorbent paper, SC paper, silhouette paper (or clay paper) (grammage 80-90 g/m$^2$ ), sandpaper, writing paper, typewriter paper (also known as SM paper), DIN 6730), scratch paper, swell paper, tissue paper (25 g/m$^2$ grammage), carbonless copy paper, also NCR paper (no carbon required), security paper, silicone paper, tension paper, spider paper, spinning paper, stone paper, straw paper, synthetic paper, ropes (or packing ropes, lift ropes), tea bag paper (mainly made of abaca fibres), directory paper (approx. 35 g/m$^2$ ), thermal paper, rotogravure paper, tracing paper, release paper, vellum paper (velin), velour paper, wasli paper, watermark paper, work printing paper, xuan paper, drawing paper (in different grammages from 60 g/m$^2$ ), newsprint, cigarette paper and combinations thereof.

The term grammage or basis weight is to be used interchangeably here.

Preferably, the provided non-woven paper fabric has a grammage of 10 - 1000 g/m$^2$. In one aspect preferably between 10 - 55 g/m$^2$, more preferably 12 - 53 g/m$^2$. In other aspects the grammage is preferably between 50 - 1050 g/m$^2$, more preferably 65 - 1000 g/m$^2$ (for example in case of wood pulp boards). In further aspects the grammage is preferably 65 to 150 g/m$^2$, further preferably of 70 to 130 g/m$^2$, further preferably of 80 to 120 g/m$^2$.

The fibrous non-woven fabric can be a commercially available fibrous non-woven fabric. In particularly, the non-woven paper fabric can be a commercially available non-woven paper fabric. In an alternative, the step of providing the fibrous non-woven fabric, in particularly the non-woven paper fabric, can also contain the step of the production of the fibrous non-woven fabric, in particularly the non-woven paper fabric. The production of a non-woven paper fabric is preferably conducted with the Rapid-Köthen method, particularly preferably in a sheet forming Rapid-Köthen plant, especially preferably according to DIN 54358 and/or ISO 5269/2 (ISO5269-2:2004(E), "Pulps - Preparation of Laboratory Sheets for Physical Testing - Part 2: Rapid Köthen Method, 2004").

In some embodiments, in the production of the fibrous non-woven fabric, in particularly the non-woven paper fabric, no further additives or fillers are used. In other embodiments additives such as conservation agents, bleaching agents, thickeners, plasticizers, surfactants, etc. may be used.

The oil-binding fibrous non-woven fabric of the present invention may be made of any fibrous non-woven fabric made from staple fibres (short) and long fibres (continuous long), bonded together by chemical, mechanical, heat or solvent treatment. The term "fibrous non-woven fabric" is used hereinunder to denote fabrics, such as felt, which are neither woven nor knitted. Some non-woven materials lack sufficient strength unless densified or reinforced by a backing. In one important aspect the fibrous non-woven fabric is paper.

The term "non-impregnated fibrous non-woven fabric" refers to the same fibrous non-woven fabric but not impregnated with any of the impregnation solutions disclosed in this application and/or otherwise silica treated.

The "nonpolar and/or oily liquids" may be selected from oils, fuels and any other nonpolar liquid, such as for example motor oil, diesel, heating oil, cutting oil, vegetable oil, oil-based solvents. Especially nonpolar substances can be separated from polar substances, for example oil from water surfaces. In some embodiments for example canola oil, toluene, dichloromethane and n-hexane were absorbed by the inventive silica-coated fibrous non-woven fabrics. In further embodiments even liquids, being both (slightly) polar as well as nonpolar may be absorbed.

Wherein the fibrous non-woven fabric has an air-dry silica-content of about 4 wt.-% or more, preferably 5 wt.-% or more, more preferably 6 wt.-% or more, more preferably 7 wt.-% or more, preferably of about 8 wt.-% or more; and up to about 30 wt.-% or less, preferably up to about 25 wt-% or less, most preferably up to about 20 wt-% or less; in one aspect between 4 wt.-% to 30 wt.-%, preferably between 6 wt.-% to 25 wt.-%, most preferably between 7 wt.-% to 20 wt.-%. In one aspect the air-dry silica content is at least 7 wt.-%.

Preferably the silica-impregnation is homogeneous in the fibrous non-woven fabric, that is the difference in air-dry silica-content on one side is less than 2:1 as compared to the other side, preferably less than 1.5:1; most preferably less than 1.2:1.

In a further aspect, the oil absorption capacity is about 3 g/g or more, preferably about 5 g/g or more, preferably about 10 g/g or more, preferably about 20 g/g or more, preferably about 25 g/g or more, and up to about 100 g/g or less, preferably up to about 60 g/g or less, more preferably up to about 55 g/g or less, even more preferably up to about 53 g/g or less; in one aspect between 3 g/g to 55 g/g, preferably between 5 g/g to 53 g/g, most preferably between 8 g/g to 50 g/g. In one aspect the oil absorption capacity content is at least 12 g/g.

In a further aspect, the water absorption capacity is reduced about 1.5 times than of the non-impregnated material, preferably is reduced about 2 times than that of the non-impregnated material, preferably about 3 times than of the non-impregnated material, preferably about 4 times than of the non-impregnated material, preferably about 5 times than of the non-impregnated material, and is reduced up to about 30 times than of the non-impregnated material, preferably up to about 20 times than of the non-impregnated material, even more preferably up to about 15 times than of the non-impregnated material, preferably between 1.5 to 30 times, most preferably between 3 to 20 times more than of the non-impregnated material. In one aspect the water absorption capacity is at least 10 times reduced in comparison to the non-impregnated material.

In a further aspect, the roughness defined by ISO 25178 of the fibrous non-woven fabric remains the same after silica coating. This is important, since otherwise the oil-absorption may be negatively affected.

In a further aspect, the surface energy of the silica impregnated fibrous non-woven fabric is increased at least 1.1 -fold, preferably 1.2-fold, preferably 1.3-fold, preferably 1.5-fold, preferably at least 2-fold, preferably at least 2.5-fold, most preferably at least 3-fold as compared to the non-impregnated fibrous non-woven fabric. In another aspect the surface energy is not increased more than 5-fold or less, more than 4.5-fold or less, more than 4-fold or less. Thus, the surface energy of the silica impregnated fibrous non-woven fabric is increased between 1.1 - 5-fold, preferably between 1.5 to 4-fold as compared to non-impregnated fibrous non-woven fabric.

In yet a further aspect, the recovery of the silica impregnated fibrous non-woven fabric is at least 90% after binding the nonpolar and/or oily liquid and subsequent immersing in ethanol to remove the nonpolar. Preferably the recovery rate is at least 95%, more preferably at least 98%, most preferably at least 99% and up to 100%, i.e. between 90% and 100%, preferably between 95% and 99%, between 96% and 98%.

In yet a further aspect, the swelling capacity of the fibres in the silica impregnated fibrous non-woven fabric is 20 wt.-% or less. Without being bound to theory it seems that the swelling capacity of the fibres in water in the fibrous non-woven fabric is reduced by the silica treatment and this effect adds to the improved oil binding capability. Thus, in one aspect the swelling capacity of the oil binding fibrous non-woven fabric after silica-impregnation is about 20% or less when immersed in water as measured by air drying, more preferably about 10% or less, even more preferably about 5% or less, even more preferably about 2% or less, most preferably about 1% or less as compared to the non-impregnated fibrous non-woven fabric. Experimentally, this method is exceedingly simple - the fibre samples, fully swollen and containing excess water, are dried very slowly and weighed periodically. It is shown that for a time the moisture is lost at a nearly constant rate. Eventually, however, the drying rate changes and thereafter steadily diminishes. It is believed that this change occurs only after all nonswelling water external to the fibre has evaporated. The moisture regain at this point of transition in the desiccation rate is considered to be indicative of the maximum water-holding capacity of the cellulose - i.e., the swelling capacity.

In yet a further aspect, water contact angle on the surface of the silica impregnated fibrous non-woven fabric is above 90°, preferably above 100°, preferably above 110° on at least one, preferably on both sides. The preferred contact angle may be up to 120°, and in certain cases even up to 150° in case of superhydrophobic surfaces. A usual surface of the silica impregnated fibrous non-woven fabric according to the present invention shows a contact angle of between 90° to 120°.

In a further aspect, the present invention relates to an impregnating solution comprising a silicon component for reducing the water binding capabilities of fibrous non-woven fabric resulting in an environmentally friendly and non-toxic final product, in particular paper and board; comprising the following compounds in weight-%:

| Compound | wt.-% |
|---|---|
| silicon component, such as tetraethyl orthosilicate (TEOS) | 2 - 20 |
| $H_2O$ | 0 - 10 (ad 100 wt.-%) |
| alcohol (e.g. EtOH, MeOH) | 75 - 90 |
| catalyst (e.g. HCl, NaOH) | 0.001 - 0.05 |

Instead of alcohol other organic solvents may also be used, however, they are usually more expensive and/or not environmentally friendly.

Thus, in a most preferred aspect, the present invention also pertains to an impregnation mixture comprising the following compounds in weight-%:

| Compound | wt.-% |
|---|---|
| silicon component, such as tetraethyl orthosilicate (TEOS) | 5-18 |
| $H_2O$ | 1 - 10 (ad 100 wt.-%) |
| alcohol (e.g. EtOH, MeOH) | 75 - 90 |
| catalyst (e.g. HCl, NaOH) | 0.01 - 0.04 |

Thus, in a more preferred aspect, the present invention also pertains to an impregnation mixture comprising the following compounds in weight-%:

| Compound | wt.-% |
| --- | --- |
| silicon component, such as tetraethyl orthosilicate (TEOS) | about 9.3 |
| $H_2O$ | about 8 |
| alcohol (e.g. EtOH, MeOH) | about 82.6 |
| catalyst (e.g. HCl, NaOH) | about 0.03 |

Thus, in a more preferred aspect, the present invention also pertains to an impregnation mixture comprising the following compounds in weight-%:

| Compound | wt.-% |
| --- | --- |
| silicon component, such as tetraethyl orthosilicate (TEOS) | about 17.1 |
| $H_2O$ | about 7.4 |
| alcohol (e.g. EtOH, MeOH) | about 75.5 |
| catalyst (e.g. HCl, NaOH) | about 0.03 |

In yet a further aspect, the fibrous non-woven fabric is impregnated with a mixture comprising the relative amounts of 1 silicon component (e.g. tetraethyl orthosilicate (TEOS)): 0-30 alcohol (e.g. EtOH or MeOH): 0-10 $H_2O$: 0.001 catalyst (i.e. acidic or basic catalyst, e.g. HCl or NaOH).

In yet a further aspect, the fibrous non-woven fabric is impregnated with a mixture comprising the relative amounts of 1 silicon component (e.g. tetraethyl orthosilicate (TEOS)): 1-30 alcohol (e.g. EtOH or MeOH): 1-10 $H_2O$: 0.001 catalyst (i.e. acidic or basic catalyst, e.g. HCl or NaOH).

In yet a further aspect, the fibrous non-woven fabric is impregnated with a mixture comprising the relative amounts of 1 silicon component (e.g. tetraethyl orthosilicate (TEOS)): 10-30 alcohol (e.g. EtOH or MeOH): 2-10 $H_2O$: 0.01 catalyst (i.e. acidic or basic catalyst, e.g. HCl or NaOH).

In yet a further aspect, the fibrous non-woven fabric is impregnated with a mixture comprising the relative amounts of 1 silicon component (e.g. tetraethyl orthosilicate (TEOS)): 15-25 alcohol (e.g. EtOH or MeOH): 3-7 $H_2O$: 0.01 catalyst (i.e. acidic or basic catalyst, e.g. HCl or NaOH).

In yet a further aspect, the fibrous non-woven fabric is impregnated with a mixture comprising the relative amounts of 1 silicon component (e.g. tetraethyl orthosilicate (TEOS)): 20 alcohol (e.g. EtOH or MeOH): 5 $H_2O$: 0.01 catalyst (i.e. acidic or basic catalyst, e.g. HCl or NaOH).

Further compositions can be found in the example section.

In yet another aspect the present invention also pertains to a fibrous non-woven fabric obtained by impregnating the fibrous non-woven fabric with one or more of the mixtures disclosed hereinunder.

In certain preferred embodiments, the impregnating solution consists of the silicon component. In other words, the portion of the silicon component in the impregnating solution is 100% by weight.

Thus, in particular, the impregnating solution may be pure silane. In other preferred embodiments, the impregnating solution contains in addition to the silicon component still at least one further component, for example a solvent component such as for example an alcohol or water and/or an acid component.

Preferably, the portion of the silicon component in the impregnating solution is in a range of 5% by weight to 100% by weight, further preferably 10% by weight to 99% by weight, further preferably 20% by weight to 98% by weight, further preferably 40% by weight to 97% by weight, further preferably 60% by weight to 96% by weight, further preferably 80% by weight to 95% by weight. Via the portion of the silicon component the extent of the water repellent properties of the surfaces of the fibrous non-woven fabrics can be adjusted in a targeted manner. Higher portions of silicon component are connected with more hydrophobic surface properties.

Preferably, the silicon component is selected from the group consisting of tetraethyl orthosilicate (TEOS), tetramethyl orthosilicate, polydimethoxysiloxane, 1,2-bis(triethoxysilyl)ethane, silicon tetraacetate, (3-Aminopropyl)triethoxysilane, (3-Aminopropyl)trimethoxysilane, N-[3-(Trimethoxysilyl)propyl]ethylenediamine, [3-(2-Aminoethylamino)propyl]trimethoxysilane, N-(2-Aminoethyl)-3-aminopropyltrimethoxysilane, 3-(2-Aminoethylamino)propyldimethoxymethylsilane, Bis[3-(trimethoxysilyl)propyl]amine, Methyltrimethoxysilane, Methyltriethoxysilane, Dimethyldimethoxysilane, Dimethyldiethoxysilane, Trimethylmethoxysilane, Trimethylethoxysilane, (polydimethylsiloxane), and mixtures of two or more thereof. Particularly preferable is the component TEOS. TEOS is a common basic chemical which is not expensive and readily available. Preferably, the component is pre-condensed (i.e. still liquid). The term *"pre-condensed'* means that only oligomers have already been formed, but that the material is not yet completely polymerized.

Preferably, the impregnating solution contains solvents in a portion which is in a range of 0 to 98% by weight, further preferably of 0.1 to 50% by weight, further preferably of 0.2 to 20% by weight, further preferably of 0.5 to 10% by weight, still further preferably of 1 to 5% by weight. Preferably, the solvent is selected from the group consisting of water, alcohol (e.g. ethanol, methanol, isopropanol, etc.) and mixtures of two or more thereof. Particularly preferably, the solvent is ethanol.

Preferably, the impregnating solution contains water in a portion which is in a range of 0 to 20% by weight, further preferably of 0.5 to 10% by weight, further preferably of 1 to 5% by weight.

Preferably, the impregnating solution contains an acidic or basic catalyst, preferably acid, for example HCl (37 wt%) in a portion of 0.001 to 0.2% by weight, further preferably of 0.005 to 0.1% by weight, further preferably of 0.01 to 0.05% by weight. As basic catalyst NaOH may be used.

Preferably, the impregnating solution according to the present invention consists of at least 95% by weight, further preferably at least 98% by weight, further preferably at least 99% by weight, further preferably at least 99.9% by weight, further preferably at least 99.99% by weight of alcohol (e.g. ethanol, methanol, isopropanol, etc.), water, silicon component and HCl. It is a special advantage of the method according to the present invention that no further components are required in the impregnating solution. Particularly preferably, the impregnating solution even consists of at least 95% by weight, further preferably at least 98% by weight, further preferably at least 99% by weight, further preferably at least 99.9% by weight, further preferably at least 99.99% by weight of ethanol, silicon component and HCl.

Preferably, the impregnated fibrous non-woven fabric comprises a silicon component (e.g. silica or aminosilica or organosilica) in a portion of 0.1 to 30% by weight, further preferably of 0.5 to 10% by weight, further preferably of 1 to 5% by weight, further preferably of 1.5 to 7.5% by weight. Preferably, the impregnated fibrous non-woven fabric consists of the fibre component (in particularly paper) and the impregnating component ($SiO_2$).

Preferably, the impregnated fibrous non-woven fabric comprises the fibre component in a portion of 90 to 99.9% by weight, further preferably of 92.5 to 99.8% by weight, further preferably of 95% by weight to 99.5% by weight.

The fibrous non-woven fabric of the invention may be any fleece or non-woven cloth, or nanostructured network made of natural material (i.e. of animal, bacterial or plant origin), such as cotton, wool, wood (e.g. wood pulp board), cellulose (e.g. paper), bacterial nanocellulose (BNC, especially for cosmetic and medical purposes), or the like.

In yet a further aspect, the fibrous non-woven fabric is made of paper and/or cotton. Preferred is the form of an oil or fuel binding fleece, for example in sizes of about 410 x 510 mm, however, it may also be formed as a part of an oil barrier or as a filter.

Preferably, the impregnated fibrous non-woven fabric of the invention consists of the fibre component (e.g. paper) and the impregnating component (e.g. $SiO_2$). The fibrous non-woven fabric may contain further components, preferably however in a portion of at most up to 50% by weight, such as for example 0 to 30% by weight, further preferably up to 25% by weight, further preferably up to 10% by weight, further preferably up to 5% by weight, further preferably up to 2% by weight, further preferably up to 1% by weight, further preferably less than 0.5% by weight. These further components may in particularly be inorganic and/or organic fillers.

Preferably, the portion of the fibre component and the impregnating component in the fibrous non-woven fabric of the present invention is at least 50% by weight, further preferably at least 75% by weight, further preferably at least 90% by weight, further preferably at least 95% by weight, further preferably at least 98% by weight, further preferably at least 99% by weight. Preferably, the impregnated fibrous non-woven fabric of the invention consists of the fibre component and the impregnating component.

In a further aspect the specific surface area determined by BET is about $\pm$ 10%, more preferably about $\pm$ 5%, most preferably about $\pm$ 2% as compared to the non-impregnated fibrous non-woven fabric. The "B.E.T." or "BET" (Brunauer-Emmett-Teller) theory aims to explain the physical adsorption of gas molecules on a solid surface and serves as the basis for an important analysis technique for the measurement of the specific surface area of materials. It is defined and measured according to DIN ISO 9277. The inventive improved fibrous non-woven fabric shows a similar surface and pore distribution and size as non-impregnated fibrous non-woven fabric, thereby having the beneficial effect that the oil retention remains the same, whereas the water retention is significantly reduced.

In yet a further aspect, the fibrous non-woven fabric is used as an oil binder for absorption and optionally recovery of a nonpolar and/or oily liquids on a surface or in a polar liquid (e.g. water). For the recovery normally an alcohol (such as ethanol or methanol) may be used to solubilize and wash-out the nonpolar liquid from the fibrous non-woven fabric which then can be re-used for further binding of new nonpolar components. In another embodiment instead of the alcohol a surfactant (e.g. in a mixture of water and surfactant in form of a washing solution) may be used. Since the recovery of the fibrous non-woven fabric is well over 90%, it can be re-used several times, preferably at least 5 times, at least 10 times, at least 20 times and even up to 80 times, even up to 90 times, and even up to 100 times.

In yet a further aspect, the fibrous non-woven fabric is used as an oil binder on a water surface, for example after an oil accident in the sea, in a lake, in a river, in the environment, on a street, after a car accident, in a garage.

In another aspect the invention pertains also to a silica impregnated fibrous non-woven fabric for the uses described herein impregnated with silica, for example by using a mixture comprising the relative amounts of 1 silicon component (e.g. tetraethyl orthosilicate (TEOS)): 10-30 alcohol (e.g. EtOH or MeOH): 2-10 $H_2O$ : 0.01 catalyst (i.e. acidic or basic catalyst, e.g. HCl or NaOH) with an increased free surface energy as compared to non-impregnated fibrous non-woven fabrics, for example in case of cellulose of more than 64 mN * m$^{-1}$. This is insofar surprising, since cellulose surfaces do have a rather reduced surface energy of about 60 mN * m$^{-1}$. However the impregnation solution in combination with the drying steps explained hereinunder result in an increased free surface energy.

In another aspect the invention pertains also to a method for producing the silica impregnated fibrous non-woven fabric of the invention for the use as described hereinunder, comprising the steps:

   a. Mixing a sol comprising 1 tetraethyl orthosilicate (TEOS) : 20 EtOH : 5 $H_2O$ : 0.01 HCl

   b. Stirring the sol for 24 h at room temperature (20 °C)

      i. coating a fibrous non-woven fabric from natural fibres by immersion of the fibrous non-woven fabric into the impregnating solution using a size press for bilateral coating, with a speed of 5 m/min at a roll pressure of 0.5 - 1.0 bar; or

      ii. using some process to impregnate fibrous non-woven fabric, for example

         a. either a spray apparatus for coating at an air pressure of 1.0 - 2.0 bar; or

         b. dipping the impregnate fibrous non-woven fabric for up to 5 minutes in the impregantion solution; or

         c. using a size press;

   c. Placing the freshly impregnated fibrous non-woven fabric in a pre-heated oven at 160 °C for 15 min at atmospheric pressure;

   d. Cooling the silica-impregnated fibrous non-woven fabric down to ambient temperature (20 °C);

   e. Thereby obtaining the silica impregnated fibrous non-woven fabric.

Preferably, the removal of the fibrous non-woven fabric from the impregnating solution is conducted at a time point 0.1 to 10 seconds, further preferably 0.1 to 30 seconds after the completion of the immersion of the fibrous non-woven fabric into the impregnating solution.

In one embodiment household articles, such as kitchen sponges, kitchen towels, kitchen tissues, and/or cosmetic pads or swabs may be impregnated only on one preferred side of the fibrous non-woven fabric in order to create an oil-binding ability on just one side and/or area of the article. In such a case coating by spraying the impregnation solution is preferred.

In another aspect the invention pertains also to a method for producing the silica impregnated fibrous non-woven fabric of the invention for the use as described hereinunder, comprising the steps:

   a. mixing a sol comprising 1 tetraethyl orthosilicate (TEOS) : 20 EtOH : 5 $H_2O$ : 0.01 HCl and fibres of a fibrous non-woven fabric in a bath so that the impregnation mixture is distributed evenly on the fibres for up to 30 minutes;

   b. extracting the fibrous non-woven fabric from the bath;

   c. placing the freshly impregnated fibrous non-woven fabric in a pre-heated oven at 160 °C for 15 min at atmospheric pressure;

   d. cooling the silica-impregnated fibrous non-woven fabric down to ambient temperature (20 °C);

   e. thereby obtaining the silica impregnated fibrous non-woven fabric.

In another aspect the invention pertains also to a method for recycling a nonpolar liquid from a polar liquid as well as the silica-impregnated fibrous non-woven fabric, comprising the steps of:

a. obtaining a silica-impregnated fibrous non-woven fabric as described hereinunder;

b. placing it in a mixture of nonpolar and polar liquids, or placing it at the surface of a nonpolar liquid so that the nonpolar liquid is absorbed by the silica-impregnated fibrous non-woven fabric;

c. placing the silica-impregnated fibrous non-woven fabric with the bound nonpolar liquid in a cleansing bath comprising an alcohol (e.g. ethanol and/or methanol), surfactant, water, and/or (organic) solvent; and/or a mixture thereof;

d. waiting for between 1 and 24 hours until the cleansing bath (comprising an alcohol (e.g. ethanol and/or methanol), surfactant, water, and/or (organic) solvent; and/or a mixture thereof), has displaced the nonpolar liquid from the silica-impregnated fibrous non-woven fabric;

    a. extracting the nonpolar liquid from the cleansing bath solution by conventional methods, such as distillation, precipitation, etc.;

    b. thereby obtaining the recycled nonpolar liquid for the next application; and

    a. drying the silica-impregnated fibrous non-woven fabric in a pre-heated oven at 160 °C for 15 min at atmospheric pressure;

    b. cooling the silica-impregnated fibrous non-woven fabric down to ambient temperature (20 °C);

    c. thereby obtaining the recycled silica impregnated fibrous non-woven fabric for the next application.

## Short description of the figures

Figure 1: Schematic illustration of the bilateral coating process using a size press.

Figure 2: Photograph of water contact angle measurements of 2 $\mu$L water droplets on silica impregnated sponge cloth (left) and cellulose swab (right) showing hydrophobic surface properties on both sides of the samples.

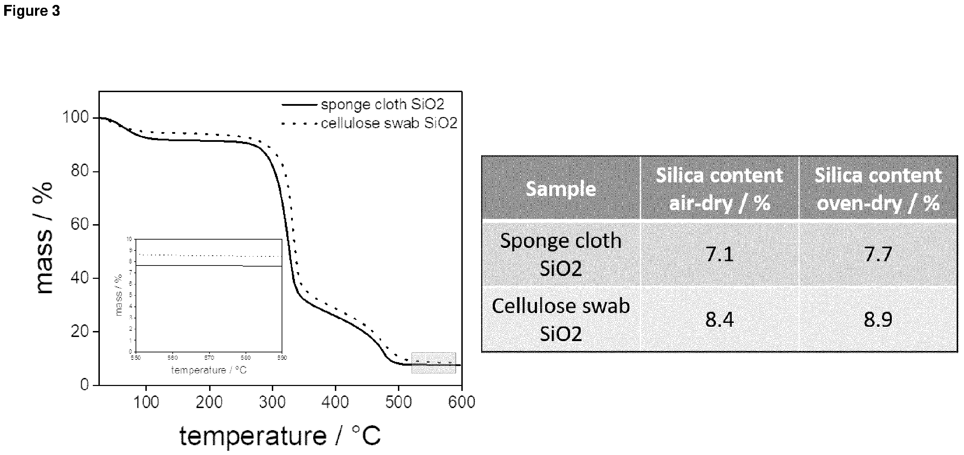

Figure 3: Thermogravimetric analysis of silica impregnated sponge cloth (solid line) and silica impregnated cellulose swabs (dotted line).

Figure 4: SEM micrographs of sponge cloth and cellulose swab (top row) and silica impregnated sponge cloth and silica impregnated cellulose swab (bottom row) at a magnification of 150 and 2000 respectively.

Figure 5: a) Absorption capacities of sponge cloths, cellulose swabs, and cotton non-woven before (white, dark grey, and white filled with diagonal lines bars respectively) and after silica coating (light grey, black, and white filled with horizontal lines bars respectively) for the solvents water, canola oil, toluene, dcm, n-hexane. b) Recovery of silica impregnated sponge cloths and cellulose swabs after solvent absorption and subsequent immersing in ethanol to remove the solvents.

## Experimental Section

## Reagents

All chemicals and solvents were purchased from Merck Millipore and Thermo Fisher Scientific and used as received unless otherwise stated. Cellulose swabs were purchased from B. Braun SE and sponge cloths were purchased from Carl Roth.

## Silica Coating

For silica coating of fabrics from natural fibres, a coating sol with following molar ratios was prepared:
1 Tetraethyl orthosilicate (TEOS) : 20 EtOH : 5 $H_2O$ : 0.01 HCl
The components of the sol were mixed, stirred for 24 h at room temperature, and used for silica coating of fabrics from natural fibres using a size press for bilateral coating or spray apparatus for unilateral coating. Using the size press, the samples were impregnated with a speed of 5 m/min at a roll pressure of 0.5 - 1.0 bar. Using the spraying apparatus, an air pressure of 1.0 - 2.0 bar was used. Freshly impregnated substrates were placed in a pre-heated oven at 160 °C for 15 min at atmospheric pressure before cooling down to ambient temperature.

**Contact angle determination**

Contact angle measurements were carried out using a OCA35 model from DataPhysics Instruments GmbH with the Program SCA-Software 4.5.2 Build 1052. All samples were measured at three positions and the average value was calculated with standard deviation. A water drop volume of 2 $\mu$L was used for static contact angle measurements with a dosing rate of 0.5 $\mu$L/s.

**Thermogravimetric Analysis (TGA)**

TGA was performed using a TGA 1 Mettler-Toledo. The samples were heated from 25 °C to 600 °C with a heating rate of 10 K/min under constant air flow of 30 mL/min.

**Scanning Electron Microscopy (SEM)**

SEM micrographs were recorded using a Zeiss EVO 10 SEM operated at an acceleration voltage of 10 kV. Prior to measurements, the samples were sputter impregnated with a platinum/palladium layer of 10 nm.

**Solvent absorption capacity**

Sponge cloths were cut into 3 x 3 cm pieces. Cellulose swabs with a dimension for 4 x 5 cm were used as received. For determination of the solvent absorption capacity, the samples are firstly weighed in the dry state. Then, the sample pieces were immersed in the solvents water, canola oil, toluene, dichloromethane (dcm), and n-hexane, respectively, for 2 min. Subsequently, the sample is removed from the solvent and the solvent was allowed to drip off before weighing the samples in the wet state. All samples were measured three times and the average value was calculated with standard deviation. The sorption capacity is calculated according to

$$Ca(g/g) = (m_t-m_0)/m_0$$

with $m_0$ as the mass of the sample before solvent absorption, and $m_t$ the mass of the sample after solvent absorption.
Determination of recovery. After weighing the samples in the wet state, the samples are placed in a beaker containing ethanol for 10 min to release the solvent and to recover the samples. Then, the samples were dried at ambient environment, before weighing again. The recovery is calculated according to

$$R(\%) = (Ca-m_r-m_0) * 100/Ca$$

with $m_r$ as the mass of the sample after solvent extraction and drying.

**Determination of wetting behavior**

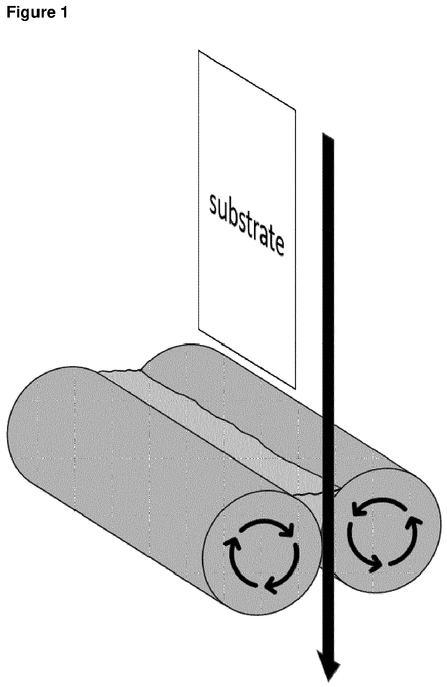

Water contact angle measurements were performed after silica coating of sponge cloths and cellulose swabs. Photographs of water droplets on both sides of the silica impregnated samples are depicted in Figure 1. All samples showed hydrophilic surface properties before silica coating, hence, no water contact angles could be determined due to instant infiltration of the water droplets in the samples. After silica coating, hydrophobic surfaces with contact angles above 90° are observed on both sides of sponge cloths and cellulose swabs.

**Determination of silica content**

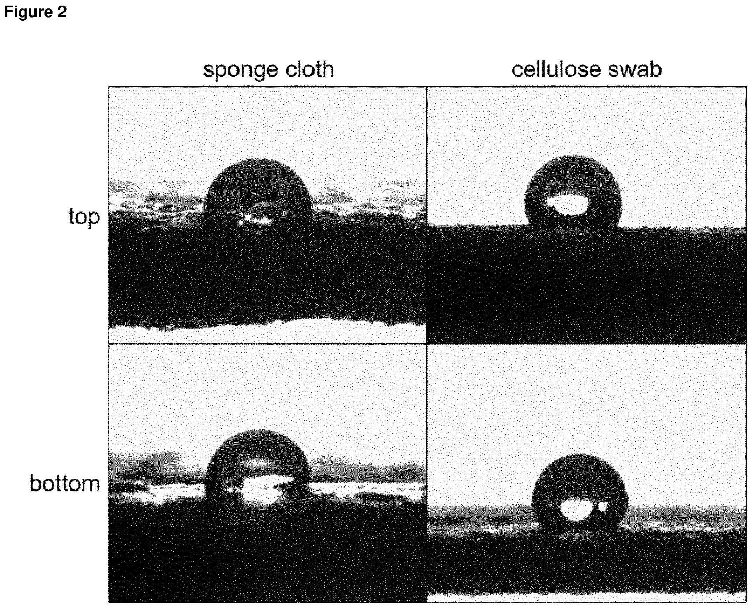

The silica content of silica impregnated sponge cloths and cellulose swabs is determined via TGA. Thereby, the silica content can be determined from the plateau of the TGA curves at 550 °C, since silica is stable up to 1700 °C, whereas natural organic fibres are totally combusted. Comparing the values between 550 °C and 600 °C before and after silica coating allows to take the natural ash content of the substrates into account. Furthermore, the weight loss occurring till 150 °C can be assigned to physically adsorbed water and is considered in the calculation to determine the silica content with respect to oven-dry samples. TGA curves of silica sponge cloths and silica impregnated cellulose swabs, as well as the calculated silica contents are depicted in Figure 2.

**Morphological analysis**

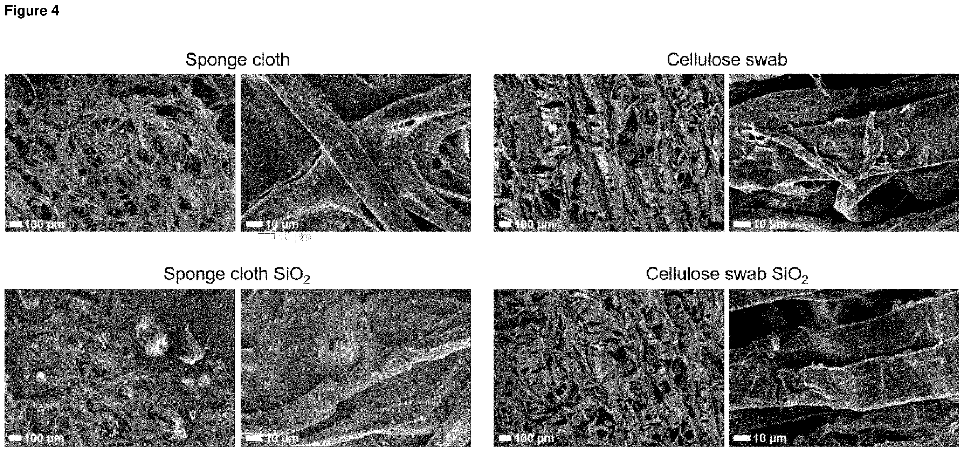

Sponge cloth and cellulose swabs were investigated with respect to their morphology before and after silica coating using SEM (Figure 4). Silica impregnated sponge cloths as well as silica impregnated cellulose swabs do not show morphological differences on the micrometer scale compared to non-impregnated sponge cloths and cellulose swabs. This can be explained due to the low silica amount as deduced from TGA.

**Determination of solvent sorption capacity**

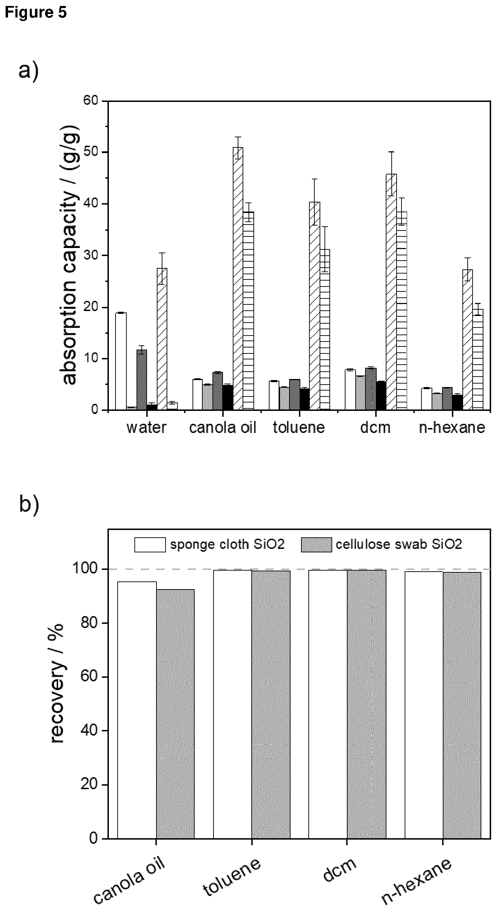

The sorption capacities of sponge cloths and cellulose swabs were determined before and after silica coating for the solvents water, canola oil, toluene, dcm, and n-hexane (Figure 5a). According to the determined absorption capacities, water absorption is drastically reduced due to silica coating for both sponge cloths and cellulose swabs. In contrast to this, the absorption capacities for the solvents canola oil, toluene, dcm, and n-hexane are only slightly reduced due to silica coating. Hence, silica impregnated sponge cloths and cellulose swabs can be used as selective oil absorber for oil-water-separation, e.g. selective oil absorption on water or wet surfaces. It is noteworthy that no directed transport of fluid is demonstrated and no application of silica sponge cloths or cellulose swabs as asymmetric membranes in oil-water-separation is encompassed by this invention.

Furthermore, the absorbed solvents are eliminated from silica impregnated sponge cloths and cellulose swabs by simply immersing in ethanol, thus replacing the absorbed solvents with ethanol. Thereby, removed solvents such as canola oil can be regained as resource and the absorbing sponge cloths and cellulose swabs can be recovered for further oil/solvent absorption after drying at ambient conditions (Figure 5b).

**Roughness and Surface Energy**

Our investigations of the oil absorbent fleeces in terms of roughness and surface energy resulted in the following:

- roughness according to ISO 25178 (device "Sensofar PLu Neox"):

    20LF80KF_virgin: SA = 5,088 +- 0,41 $\mu$m; SZ = 69,797 +- 13,38 $\mu$m

    20LF80KF_SiO$_2$: SA = 5,179 +-1,098 $\mu$m; SZ = 61,78 +- 7,02 $\mu$m

    Swab (cotton)_virgin: SA = 28,778 $\mu$m; SZ = 573,87 $\mu$m

    Swab (cotton)_SiO$_2$: SA = 23,671 $\mu$m; SZ = 318,7 $\mu$m

The roughness does not seem to change due to a silica coating, deviations are within the error range of the method used.

Surface energy determined with a binary system of water and ethylene glycol according to Zhang et al., Langmuir 2019, 35, 12317-

    water-ethylene glycol:
    20LF80KF-SiO$_2$: ys,d= 154.09, $\gamma$s,p=24.05 **ys=178.14 mN/m**

    water-ethylene glycol:
    20LF80KF-virgin: $\gamma$s,d=12.10, $\gamma$s,p=52.61 ys= **64.7 mN/m**

Surprisingly, the surface energy increases with silica coating and approaches the surface energy of clean glass (300-500 mN/m). This is in contrast to earlier report where silica coatings decreased the surface energy.

Accordingly, the hydrophobic treatment cannot be explained by the classic route, namely the increase in roughness and/or the reduction in surface energy.

Without being bound to theory, the effect of the silica coating in terms of hydrophobicity may be explained by the fact that the fibres are "vitrified" and thus no longer absorb water or swelling with water is prevented (cf. water absorption capacity before and after silica coating), in combination with the intrinsic roughness of natural fibres.

**EP 4 311 875 A1**

**Claims**

1. Use of a silica impregnated fibrous non-woven fabric with air-dry silica content of 7 - 30 wt.-% and having a surface energy on both sides, which is increased as compared to the non-impregnated fibrous non-woven fabric for binding nonpolar and/or oily liquids.

2. The use according to claim 1, wherein the silica impregnated fibrous non-woven fabric of claim 1, has at least one additional feature selected from:

     a. an air-dry silica content of at least 10.5 wt.-%;
     b. an oil absorption capacity of at least 3 g/g;
     c. a roughness as defined by ISO 25178 which remains the same as compared to the non-impregnated fibrous non-woven fabric;
     d. a retention of nonpolar and/or oily liquids for at least 1 hour within the silica impregnated fibrous non-woven fabric;
     e. the water absorption capacity is reduced at least 1.5-times as compared to the non-impregnated fibrous non-woven fabric;
     f. a swelling capacity of the fibres in the silica impregnated fibrous non-woven fabric of 20 wt.-% or less;
     g. a contact angle on the surface of the silica impregnated fibrous non-woven fabric of above 90° on both sides; and/or
     h. a porosity which is the same as compared to the non-impregnated fibrous non-woven fabric.

3. The use according to any of the previous claims, wherein the recovery of the silica impregnated fibrous non-woven fabric after binding the nonpolar and/or oily liquid and subsequent immersing in ethanol to remove the nonpolar and/or oily liquid is at least 90%.

4. The use according to any of the previous claims, wherein the swelling capacity of the fibres in the silica impregnated fibrous non-woven fabric is 10 wt.-% or less.

5. The use according to any of the previous claims, wherein the fibrous non-woven fabric is impregnated with 1 silicon component (e.g. tetraethyl orthosilicate (TEOS)): 1-30 alcohol (e.g. EtOH): 1-10 $H_2O$: 0.001-0.02 acidic or basic catalyst (e.g. HCl).

6. The use according to any of the previous claims, wherein the fibrous non-woven fabric is made of paper, viscose (regenerated cellulose), a biodegradable polymer and/or cotton.

7. The use according to any of the previous claims as an oil binder for absorption and optionally recovery of a nonpolar and/or oily liquids on a surface or in a polar liquid (e.g. water).

8. The use according to any of the claims 1 to 8 as a nonpolar and/or oil liquid binder in an environment selected from the sea, a lake, a river, a street, a garage and/or in a household environment.

9. A silica impregnated fibrous non-woven fabric for the use in any of the claims 1 to 8, **characterized by** a surface energy of the silica impregnated fibrous non-woven fabric, which is increased as compared to the non-impregnated fibrous non-woven fabric; and having a surface energy which is increased as compared to the non-impregnated fibrous non-woven fabric.

10. A silica impregnated fibrous non-woven fabric of claim 9, having at least one additional feature selected from:

     a. an air-dry silica content of at least 10.5 wt.-%;
     b. an oil absorption capacity of at least 3 g/g;
     c. an roughness as defined by ISO 25178 which remains the same as compared to the non-impregnated fibrous non-woven fabric;
     d. a retention of nonpolar and/or oily liquids for at least 1 hour within the silica impregnated fibrous non-woven fabric;
     e. the water absorption capacity is reduced at least 1.5-times as compared to the non-impregnated fibrous non-woven fabric;
     f. a swelling capacity of the fibres in the silica impregnated fibrous non-woven fabric of 20 wt.-% or less;

12

g. a contact angle on the surface of the silica impregnated fibrous non-woven fabric of above 90° on at least one side; and/or

h. a porosity which is the same as compared to the non-impregnated fibrous non-woven fabric.

**11.** A method for producing the silica impregnated fibrous non-woven fabric of claims 9 or 10 for the use in any of the claims 1 to 8, comprising the steps:

a. Mixing a sol comprising 1 silicon component (e.g. tetraethyl orthosilicate (TEOS)): 10-30 alcohol (e.g. EtOH): 2-10 $H_2O$ : 0.005-0.02 acidic or basic catalyst (e.g. HCl);

b. Stirring the sol for 24 h at room temperature (20°C)

i. coating a fibrous non-woven fabric from natural fibres using a size press for bilateral coating, with a speed of 5 m/min at a roll pressure of 0.5 - 1.0 bar; or

ii. using a spray apparatus for unilateral coating at an air pressure of 1.0 - 2.0 bar

c. Placing the freshly impregnated fibrous non-woven fabric in a pre-heated oven at 160 °C for 15 min at atmospheric pressure;

d. Cooling the silica-impregnated fibrous non-woven fabric down to ambient temperature (20 °C);

e. Thereby obtaining the silica impregnated fibrous non-woven fabric.

**Figure 1**

Figure 2

EP 4 311 875 A1

**Figure 3**

| Sample | Silica content air-dry / % | Silica content oven-dry / % |
|---|---|---|
| Sponge cloth SiO2 | 7.1 | 7.7 |
| Cellulose swab SiO2 | 8.4 | 8.9 |

EP 4 311 875 A1

Figure 4

**Figure 5**

a)

b)

Europäisches
Patentamt

European
Patent Office

Office européen
des brevets

# EUROPEAN SEARCH REPORT

Application Number

EP 22 18 7285

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 009 558 A2 (CENTI CT DE NANOTECNOLOGIA E MATERIAIS TECNICOS FUNCIONAIS E INTELIGEN) 20 April 2016 (2016-04-20) * paragraphs [0001], [0006], [0009], [0016], [0021]; claims * | 1-11 | INV. D06M11/79 D06M13/507 B01J20/10 B01J20/32 C09K3/32 |
| X | US 2022/034041 A1 (NAU MAXIMILIAN [DE] ET AL) 3 February 2022 (2022-02-03) | 9-11 | |
| A | * paragraphs [0017], [0076]; table 1 * | 1-8 | |
| X | CN 106 480 711 A (UNIV TIANJIN TECHNOLOGY) 8 March 2017 (2017-03-08) | 1-10 | |
| A | * paragraphs [0071], [0072] * | 11 | |

TECHNICAL FIELDS SEARCHED (IPC)

D06M
G01N
F16D
B01J
C09K

The present search report has been drawn up for all claims

| Place of search | Date of completion of the search | Examiner |
|---|---|---|
| The Hague | 24 January 2023 | Blas, Valérie |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 18 7285

This annex lists the patent family members relating to the patent documents cited in the above-mentioned European search report.
The members are as contained in the European Patent Office EDP file on
The European Patent Office is in no way liable for these particulars which are merely given for the purpose of information.

24-01-2023

| Patent document cited in search report | | Publication date | Patent family member(s) | | Publication date |
|---|---|---|---|---|---|
| EP 3009558 | A2 | 20-04-2016 | NONE | | |
| US 2022034041 | A1 | 03-02-2022 | CN | 112840073 A | 25-05-2021 |
| | | | DE | 102018124255 A1 | 02-04-2020 |
| | | | EP | 3655575 A1 | 27-05-2020 |
| | | | US | 2022034041 A1 | 03-02-2022 |
| | | | WO | 2020069943 A1 | 09-04-2020 |
| CN 106480711 | A | 08-03-2017 | NONE | | |

EPO FORM P0459

For more details about this annex : see Official Journal of the European Patent Office, No. 12/82